Europäisches Patentamt

(19) **European Patent Office**

Office européen des brevets

(11) Veröffentlichungsnummer: **0 188 700**
**B1**

(12) **EUROPÄISCHE PATENTSCHRIFT**

(45) Veröffentlichungstag der Patentschrifft:
07.02.90

(51) Int. Cl.⁵: **B 01 D 7/00, B 01 D 7/02**

(21) Anmeldenummer: **85115034.2**

(22) Anmeldetag: **27.11.85**

(54) Verfahren und Vorrichtung zur fraktionierten Desublimation von dampfförmigen Feststoffen aus Gas-Dampf-Gemischen.

(30) Priorität: **17.01.85 DE 3501371**

(43) Veröffentlichungstag der Anmeldung:
**30.07.86 Patentblatt 86/31**

(45) Bekanntmachung des Hinweises auf die Patenterteilung:
**07.02.90 Patentblatt 90/06**

(84) Bennante Vertragsstaaten:
**AT BE DE FR GB IT NL SE**

(56) Entgegenhaltungen:
**DE-C-271 787**
**DE-C-1 544 129**
**FR-A-2 082 822**
**GB-A-2 063 695**
**US-A-4 126 425**

(73) Patentinhaber: **HÜLS AKTIENGESELLSCHAFT**
**Patentabteilung / PB 15 - Postfach 13 20**
**D-4370 Marl 1 (DE)**

(72) Erfinder: **Scharf, Helmut, Dr.**
**Kilianstrasse 75**
**D-4235 Schermbeck (DE)**

EP 0 188 700 B1

LIBERGRAF, STOCKHOLM 1990

**Beschreibung**

Die Erfindung betrifft ein Verfahren nach dem Oberbegriff des Anspruchs 1 sowie eine Vorrichtung zur Durchführung des Verfahrens.

Die Erfindung verfolgt den Zweck, das Desublimierverfahren hinsichtlich seines Trenneffektes zu verbessern und Störungen in der benutzten Vorrichtung möglichst zu unterbinden. Mit Desublimieren wird der unmittelbare Übergang eines dampfförmigen Feststoffes in den festen Zustand bezeichnet.

Bei der Herstellung einer Reihe von anorganischen und organischen Feststoffen fallen diese zunächst dampfförmig in einem Trägergas an und werden anschließend durch Abkühlen des Gas-Dampf-Gemisches an thermostatisierten Wandflächen fraktioniert desublimiert. Diese Verfahren benötigen große Kühlflächen. Durch das Absetzen der desublimierten Feststoffe an den Wänden wird der Wärmeübergang zu dem Kühlmedium verändert, so daß unterschiedliche Feststoffqualitäten entstehen, und die Apparate werden sehr schnell verstopft. Deshalb werden häufig Kratzvorrichtungen in die Apparate eingebaut, die jedoch störanfällig und aufwendig sind.

Eine andere Möglichkeit, Feststoffe aus der Gasphase zu desublimieren, besteht in der direkten Abkühlung des Gas-Dampf-Gemisches mit Hilfe von unter den Desublimationsbedingungen gasförmig vorliegenden Kühlmitteln. So wird z. B. gemäß GB-A-1 081 579 als bevorzugtes Kühlmittel Wasser unter Druck in das Gas-Dampf-Gemisch eingedüst und verdampft. Bei diesem Verfahren wird jedoch an den Wassertröpfchen, bevor sie ganz verdampft sind, neben dem festen Hauptprodukt auch ein Teil der festen Nebenprodukte abgeschieden, so daß eine fraktionierte Desublimation kaum möglich ist. Durch die bevorzugte Verwendung von Wasser scheidet das Verfahren auch in den Fällen aus, in denen wasserempfindliche Stoffe, wie z. B. Säureanhydride, desublimiert werden sollen. Da die Wände des Desublimators beheizt werden und die Verweilzeit des Gas-Dampf-Flüssigkeit-Gemisches in der Desublimationszone sehr lang ist, wird ein Teil des Kühlmittels von den Wänden zusätzlich aufgeheizt, so daß große Mengen an Kühlmittel benötigt werden. Dies gilt ganz besonders bei der Verwendung von Kühlgasen, bei denen die hohe Verdampfungswärme des Wassers nicht zur Kühlung zur Verfügung steht. Am Boden des Desublimators wird zusätzlich noch ein Kühlgas eingeführt. Hierdurch wird die insgesamt benötigte Menge an Kühlmittel und damit auch die Abgasmenge weiter erhöht.

Bei dem Verfahren nach DE-PS-1 108 663 wird das vom Produkt bereits befreite Trägergas über Kühler im Kreis gefahren und mit dem mit Produkt beladenen Gas vermischt. Gleichzeitig wird in den Mischraum flüssiges Produkt eingespritzt. Eine fraktionierte Desublimation ist nach diesem Verfahren schwer durchführbar.

In der Schrift FR-A-2 082 822 wird vorgeschlagen, die Desublimation mit Luft in zwei hintereinandergeschalteten Rohren durchzuführen, um eine bessere Abscheidung des Feststoffes an den Rohrwandungen zu erzielen und einen reineren Feststoff zu erhalten. Für dieses Verfahren werden technisch nicht realisierbare große Wandflächen benötigt, und die Rohre werden durch den abgeschiedenen Feststoff schnell verstopft.

Ein ähnliches Verfahren, bei dem die Abkühlung des Gas-Dampf-Gemisches mit Hilfe von Kühlgasen und mit zusätzlich gekühlten und mit Kratzvorrichtungen versehenen Rohren durchgeführt wird, ist in der DE-C-2 617 595 beschrieben. Der feindisperse Teil des Produktstromes wird bei diesem aufwendigeren und störanfälligeren Verfahren im Kreis gefahren, und eine fraktionierte Desublimation ist ebenfalls nicht möglich.

Ein weiteres Desublimationsverfahren wird in der DE-C-1 544 129 beschrieben, bei dem das den dampfförmigen Feststoff enthaltende Trägergas und das Kühlgas zwei koaxial gleichsinnig rotierende Gaszylinder bilden, die sich axial in entgegengesetzter Richtung bewegen, und bei dem der desublimierte Feststoff mit einem Teil des Kühlgases aus dem Desublimator ausgetragen wird. Bei diesem Verfahren muß sehr viel Kühlgas verwendet werden, um zu verhindern, daß das Gas-Dampf-Gemisch mit der Wandung in Berührung kommt, und um den desublimierten Feststoff auszutragen. Eine fraktionierte Desublimation ist auch bei diesem Verfahren nicht möglich.

Aufgabe der Erfindung war es daher, ein einfaches Verfahren und eine Vorrichtung für die fraktionierte Desublimation von Feststoffen aus Gas-Dampf-Gemischen durch direkte Abkühlung des Gas-Dampf-Gemisches mit Hilfe von Kühlgasen zu entwickeln, bei dem eine saubere Trennung des Hauptproduktes von desublimierbaren Nebenprodukten erreicht wird und keine Verstopfungen des Desublimators durch desublimierte Feststoffe erfolgen.

Diese Aufgabe wird erfindungsgemäß dadurch gelöst, daß das Gas-Dampf-Gemisch und das Kühlgas stark beschleunigt werden und die beiden aufeinander zuströmenden Gase mit hoher Strömungsgeschwindigkeit aufeinanderprallen, so daß der Desublimationsvorgang in sehr kurzer Zeit abläuft und beendet ist, bevor der gemischte Gasstrom mit Gefäßwandungen in Berührung kommt, wobei die Menge und die Temperatur des Kühlgases so geregelt werden, daß die Temperatur des Mischgases unter der Sublimationstemperatur des gewünschten Feststoffes und oberhalb der Sublimationstemperatur der Nebenprodukte liegt.

Bei dem erfindungsgemäßen Verfahren wird die Desublimation des Feststoffes aus der Gasphase durch äußerst schnelle Abkühlung des den dampfförmigen Feststoff enthaltenden Gas-Dampf-Gemisches mit Hilfe eines gasförmigen Kühlmittels durchgeführt, wobei die Abkühlungsgeschwindigkeit so hoch gewählt wird, daß die entsprechend dem eingestellten Dampfdruck des Feststoffes und der gewählten Sublimationstemperatur kondensierbare Feststoffmenge vollständig desublimiert, bevor das Gas-Dampf-Gemisch mit irgendwelchen Apparatewänden in Berührung kommt. Hierbei wird die hohe Desublimiergeschwindigkeit vieler aus der Gasphase desublimierbarer Verbindungen ausgenutzt. So wurde bei dem erfindungsgemäßen Verfahren festgestellt, daß z. B. Pyromellitsäuredianhydrid bei entsprechend schneller Abkühlung der Gasphase innerhalb von $10^{-4}$ s vollständig desublimiert. Die schnelle Abkühlung des Gas-Dampf-Gemisches wird erfindungsgemäß dadurch erreicht, daß der Gas-Dampf-Strom mit Hilfe einer Düse auf eine Geschwindigkeit zwischen 10 und 200 m/s beschleunigt wird. Es sind auch Strömungsgeschwindigkeiten unter 10 m/s möglich, jedoch wird bei kleineren Geschwindigkeiten ein weniger

2

reiner Feststoff erhalten. Der Grad der Verunreinigung des Feststoffes hängt hierbei von der Differenz der Sublimationstemperaturen von dem Feststoff und den Nebenprodukten ab. Vorzugsweise sind die Strömungsgeschwindigkeiten größer 10 m/s und bei Feststoffen, bei denen die Sublimationstemperaturen des Feststoffes und der Nebenprodukte sehr eng beieinanderliegen, wie dies z. B. bei Pyromellitsäuredianhydrid der Fall ist, werden Strömungsgeschwindigkeiten des Gas-Dampf-Gemisches größer 30 m/s bevorzugt. Obwohl mit zunehmender Strömungsgeschwindigkeit und damit abnehmender Abkühlzeit der desublimierte Feststoff sauberer wird, existiert eine technisch sinnvolle Obergrenze, da mit zunehmender Strömungsgeschwindigkeit die desublimierten Feststoff-Teilchen immer kleiner werden und mit feineren Filtern aus dem Gasstrom abgetrennt werden müssen. Hinzu kommt, daß bei sehr hohen Strömungsgeschwindigkeiten vor der Düse entsprechend hohe Drücke aufgebaut werden müssen, was mit zusätzlichen Kosten verbunden ist. Als technisch sinnvoll werden daher Strömungsgeschwindigkeiten des Gas-Dampf-Gemisches kleiner ca. 200 m/s angesehen, wobei Geschwindigkeiten kleiner 160 m/s bevorzugt werden.

Die Geschwindigkeit des Kühlgases beträgt ebenfalls 10 bis 200 m/s, bevorzugt 20 bis 100 m/s.

Als Kühlgase für das erfindungsgemäße Verfahren kommen Stoffe in Frage, die unter den Desublimationsbedingungen gas- bzw. dampfförmig sind und mit dem dampfförmigen Feststoff nicht reagieren. In Frage kommen hauptsächlich Gase wie z. B. Stickstoff, Sauerstoff, Kohlendioxid, Kohlenmonoxid und Gemische von diesen Gasen. Besonders bevorzugt wird Luft als Kühlgas. Die Temperatur der Kühlgase sollte möglichst niedrig sein, da die benötigte Menge an Kühlgas umso niedriger ist, je tiefer die Temperatur des Gases ist. Bevorzugt werden Gase mit Raumtemperatur. Es können aber auch Gase mit höherer Temperatur, wie z. B. Luft, die durch den erforderlichen Kompressionsvorgang erwärmt worden ist, verwendet werden, nur ist in diesem Fall der Verbrauch an Luft entsprechend höher. Umgekehrt können auch Gase und Dämpfe mit einer Temperatur unterhalb der Raumtemperatur verwendet werden. Da aber Kühlenergie in der Regel teuer ist, ist dies technisch weniger sinnvoll.

Gegenstand der Erfindung ist weiter eine Vorrichtung zur fraktionierten Desublimation von dampfförmigen Feststoffen aus einem Gas-Dampf-Gemisch mit Hilfe eines Kühlgases, dadurch gekennzeichnet, daß die Düsen in ihrem gesamten Querschnitt einander gegenüberstehen und daß die Düsenachsen auf einer Geraden liegen, daß die Düsenöffnungen rund, vieleckig oder schlitzförmig sind und daß der Durchmesser oder die Diagonale oder die Schlitzbreite 2 bis 12 mm, bevorzugt 4 bis 8 mm, beträgt.

Die Öffnung der zur Erzeugung der hohen Strömungsgeschwindigkeit verwendeten Düse kann kreisförmig, elliptisch, vieleckig oder schlitzförmig sein; bevorzugt wird eine kreisförmige Öffnung, da sie einen bezüglich seiner Randzonen gleichmäßigen Gasstrahl erzeugt. Bei der vieleckigen Düse wird ein quadratischer, rechteckiger oder sechseckiger Querschnitt bevorzugt. Die Größe der Düsenöffnung richtet sich nach dem gewünschten Durchsatz von Gas-Dampf-Gemisch oder Kühlgas und nach der gewünschten Strömungsgeschwindigkeit. Düsen mit kleinerem Durchmesser als 2 mm sind zwar möglich, sie bringen aber keine technischen Vorteile.

Die obere Begrenzung des Durchmessers hängt auch von der gewünschten Reinheit des Produktes ab. Das Gemisch aus Gas-Dampf-Gemisch und Kühlgas muß zunächst senkrecht zu den beiden Einzelströmen aus dem Desublimationsraum entweichen. Seine Menge nimmt bei gleicher Strömungsgeschwindigkeit quadratisch mit dem Radius der Düsen zu, und es ist leicht verständlich, daß mit zunehmender Menge des Gas-Dampf-Gemisches und des Kühlgases die Durchmischung der beiden Einzelströme abnimmt.

Welche Mengen optimal sind, ist von Feststoff zu Feststoff verschieden; sie hängen auch von der Differenz der Sublimationstemperaturen von Feststoff und Nebenprodukten ab, so daß eine allgemeine Obergrenze für den Düsendurchmesser nicht angegeben werden kann. Für Feststoffe, bei denen die Sublimationstemperaturen in der Nähe der Sublimationstemperaturen der Nebenprodukte liegen, und bei denen die Reinheitsforderungen hoch sind, wie z. B. bei Pyromellitsäuredianhydrid, werden Düsendurchmesser bis zu 12 mm und besonders solche von 4 bis 8 mm bevorzugt. Für Düsen mit vieleckigem Querschnitt gelten die Bedingungen sinngemäß für die Breite und Länge oder die Diagonale dieser Düsenquerschnitte.

Die Länge der Düse (Länge des Rohres mit verengtem Querschnitt) ist für das Verfahren nicht wesentlich. Da der Strömungswiderstand jedoch mit zunehmender Länge der Düse zunimmt, werden kürzere Düsen bevorzugt. Auch sehr kurze Düsen in Form von Lochplatten sind geeignet. Als gut geeignet haben sich Düsen mit einer Kanallänge von 5 bis 30 mm erwiesen.

Bei der erfindungsgemäßen Vorrichtung muß die Wand an der Austrittsstelle für das Gas-Dampf-Gemisch eine Temperatur aufweisen, die höher als die Sublimationstemperatur des Feststoffes in dem Gas-Dampf-Gemisch liegt, da sonst an dieser Stelle Feststoff desublimiert und von dieser Stelle aus schlauchartig in den Desublimationsraum wächst und schließlich zu Verstopfungen führt. Das Temperieren der Düsenöffnung kann nach verschiedenen Methoden erfolgen, die einfachste ist, das Gas-Dampf-Gemisch vor seinem Eintritt in die Düse nur so weit abzukühlen, daß seine Temperatur ausreicht, die Temperatur der Wand an der Düsenöffnung auf dem gewünschten Niveau zu halten. Da eine hohe Temperatur des Gas-Dampf-Gemisches anschließend eine entsprechend große Menge an Kühlgas erfordert, sollte die Temperatur des Gas-Dampf-Gemisches vor dem Düseneintritt so niedrig wie möglich sein. Dies wird erfindungsgemäß dadurch erreicht, daß die Innenwandung der Düse oder die gesamte Düse aus einem die Wärme gut leitenden Material, wie z. B. Kupfer, besteht, so daß die an der Düsenöffnung benötigte Wärme nicht nur aus dem Gas-Dampf-Gemisch an dieser Stelle, sondern auch aus dem hinteren Teil der Düse geliefert wird. Eine andere erfindungsgemäße Möglichkeit ist, die Düse zu beheizen.

Als vorteilhaft hat sich erwiesen, die Düse für das Gas-Dampf-Gemisch mit einem Kragen zu versehen. Dieser Kragen oder Steg, der auch als Stufe ausgebildet sein kann, hat die Aufgabe, einen Teil des bereits etwas abgekühlten Gasstromes innerhalb des Kragenbereiches zirkulieren zu lassen, damit die in ihm enthaltenen Feststoff-Teilchen als Desublimationskeime dienen können. Der Abstand des Kragens von der Mitte der Düsenöffnung richtet sich nach dem Durchmesser und der Form der Düse und nach der Geschwindigkeit des Gas-Dampf-Gemisch-Stromes. In der Regel beträgt er zwischen 4 und 16 mm. Bei kleineren oder größeren Abständen, die prinzipiell möglich sind, verliert der Kragen an Wirksamkeit.

Der Abstand zwischen den Düsen für das Gas-Dampf-Gemisch und das Kühlgas hängt von dem zu desublimierenden Feststoff, von der gewünschten Reinheit und der gewünschten Korngröße der abgeschiedenen Teilchen dieses Feststoffes und von den Strömungsgeschwindigkeiten der beiden Gasströme ab, so daß im Einzelfall der optimale Abstand experimentell ermittelt werden muß. Für Feststoffe mit hoher Desublimationsgeschwindigkeit und bei hohen Reinheitsanforderungen, wie z. B. Pyromellitsäuredianhydrid, kann der Abstand 2 bis 100 mm betragen.

In der Regel werden Abstände von 20 bis 50 mm bevorzugt.

In der Praxis betragen die Mengen an Gas-Dampf-Gemisch ein Vielfaches des Durchsatzes einer einzelnen Düse mit oben genannten Abmessungen. Eine Anpassung erfolgt durch eine entsprechende Anzahl von Düsen, in dem der Gas-Dampf-Gemisch-Strom auf die notwendige Anzahl von neben- und/oder übereinander angeordneten Düsen verteilt wird. Eine andere und bevorzugte Anpassung der Düsen an den Gesamtdurchsatz an Gas-Dampf-Gemisch und Kühlgas besteht in der Verwendung von Schlitzdüsen, bei denen die Breite des Schlitzes dem Durchmesser einer Runddüse entspricht und die Länge des Schlitzes sich nach dem gewünschten Gasdurchsatz richtet.

Das erfindungsgemäße Verfahren hat den Vorteil, daß es sehr einfach ist und eine saubere Trennung des Feststoffes von den ebenfalls desublimierbaren Nebenprodukten ermöglicht, so daß ein sehr reiner Feststoff mit praktisch quantitativer Ausbeute erhalten wird. Weiter ist von Vorteil, daß auch die erfindungsgemäße Vorrichtung sehr einfach ist, keine mechanisch bewegten Teile enthält, keine thermostatisierten Wandflächen benötigt und nicht zu Verstopfungen neigt. Durch die Einfachheit des Verfahrens und der Vorrichtung ist ein störungsfreier Lauf der Anlage möglich und der Aufwand ist niedrig.

Einige geeignete Anordnungen von Düsenpaaren sind in den Figuren dargestellt. Die erfindungsgemäße Vorrichtung ist jedoch nicht auf diese Beispiele beschränkt.

— Figur 1 zeigt eine Anordnung von zwei kreisförmigen Düsen, von denen nur die Austrittsenden gezeichnet sind. Die Achsen beider Düsen liegen auf einer Geraden. Das Kühlgas strömt durch die Düse 1, das Gas-Dampf-Gemisch durch die Düse 2. Die Düse 2 hat eine Innenwand 4 aus wärmeleitendem Material, die von einer wärmeisolierenden Schicht 5 umgeben ist.
Die beiden Gasstrahlen treffen in dem Raum zwischen den Düsen aufeinander und verlassen diesen Raum - nach Durchmischung und Abkühlung des Gas-Dampf-Gemisches - in einer Strömung 3, die im wesentlichen senkrecht zur Düsenachse gerichtet ist.
— Figur 2 zeigt eine Düsenanordnung, bei der die Düse für das Gas-Dampf-Gemisch einen Kragen 6 hat.
— Figur 3 zeigt die Anordnung von zwei Breitschlitzdüsen, die mit ihrem gesamten Querschnitt einander gegenüberstehen.
— Figur 4 zeigt die Anordnung von zwei ringförmigen Schlitzdüsen, deren Achsen auf einer Geraden liegen. Bei dieser Anordnung verläßt das Gemisch 3 aus Kühlgas, abgekühltem Gas-Dampf-Gemisch und desublimiertem Feststoff die Anordnung durch die innen mit einem großen Kanal versehene Kühlgasdüse.

Das Verfahren und die Vorrichtung werden in den folgenden Beispielen näher erläutert; dabei wurde Pyromellitsäuredianhydrid als zu desublimierender Feststoff im Gas-Dampf-Gemisch gewählt. Das Gas-Dampf-Gemisch war in diesem Fall das Reaktionsgas von der Herstellung des Pyromellitsäuredianhydrids durch Luftoxidation von Tetraalkylbenzolen.

**Beispiele 1 bis 15**

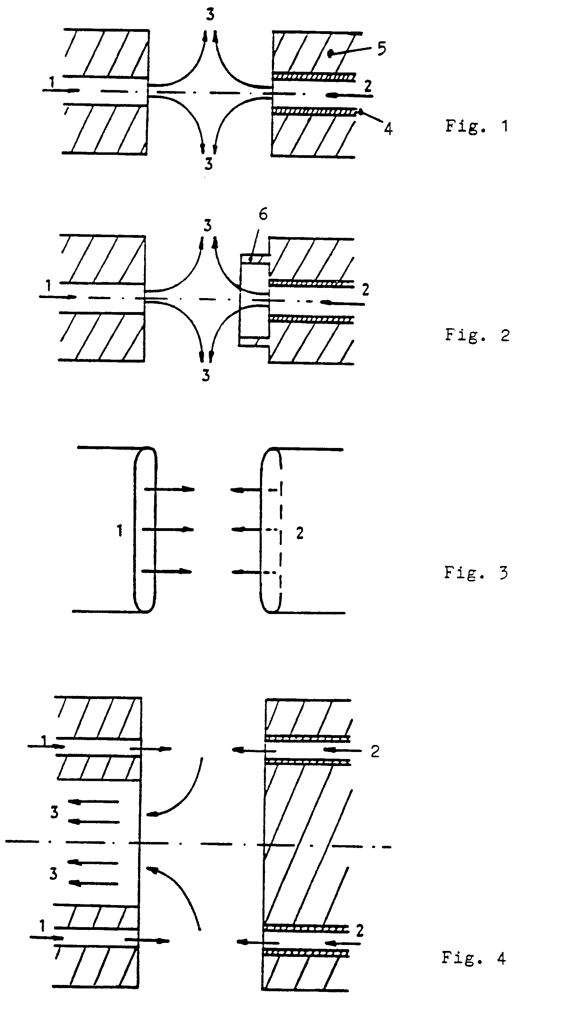

Durch Oxidation von Tetraalkylbenzolen mit Luft wurde ein Pyromellitsäuredianhydrid (PMDA) enthaltendes Gas-Dampf-Gemisch erzeugt. Neben PMDA enthielt das Gas-Dampf-Gemisch als Nebenprodukte, von denen das PMDA abgetrennt werden mußte, Trimellitsäureanhydrid, Methyl-iso-propylphthalsäureanhydrid, Dimethyl-phthalsäureanhydrid und eine Reihe weiterer, nur in kleinen Mengen vorhandener und nur zum Teil aufgeklärter Verbindungen wie Aldehyde und Chinone. Die Hauptmenge des Gas-Dampf-Gemisches bestand aus Stickstoff und Sauerstoff und geringen Mengen an Wasserdampf, Kohlenmonoxid und Kohlendioxid. Aus diesem Gas-Dampf-Gemisch wurde das PMDA unter Verwendung der in Fig. 1 abgebildeten Düsenanordnung mit Hilfe von Luft (Raumtemperatur) als Kühlgas desublimiert. Die notwendigen Gasgeschwindigkeiten wurden bei gegebenem Gasdurchsatz über den Düsenquerschnitt eingestellt. Die Reinheit des abgeschiedenen PMDA wurde gaschromatographisch nach Veresterung des PMDA ermittelt, und die Verteilung der Größe der desublimierten PMDA-Teilchen wurde mit Hilfe eines Kaskadenimpaktors und in einzelnen Fällen mittels REM-Aufnahmen bestimmt.

## Beispiele 16 bis 18

Bei den Desublimationsversuchen 16 bis 18 wiesen die Düsen eines Düsenpaares unterschiedliche Querschnitte auf. Die übrigen Bedingungen entsprachen denen der Beispiele 1 bis 15.

## Beispiele 20 bis 23

Für die Versuche der Beispiele 20 bis 23 wurde eine der Fig. 2 entsprechende Düsenanordnung mit einem Kragen vor der Düse für das Gas-Dampf-Gemisch verwendet. Die Höhe des Kragens betrug 10 mm und der Durchmesser 25 mm. Die übrigen Bedingungen entsprachen wieder denen der Beispiele 1 bis 15.

Die Ergebnisse sind in Tab. 1 zusammengestellt. Der Wirkungsgrad der Desublimation, ausgedrückt durch das Verhältnis desublimiertes PMDA/Gesamtmenge PMDA, war in allen Fällen größer als 99 %. Die Reinheit des PMDA lag über 99 %. Die Nebenprodukte des PMDA waren in der Gasphase geblieben. Die Gasphase wurde nach der Desublimation auf PMDA untersucht.

Tabelle 1: Desublimation von Pyromellitsäuredianhydrid mit Luft als Kühlgas

| Bei-spiel Nr | Düsen-abstand | Düsen-durchmesser a / b | Geschwindigkeit Gas-Dampf-gemisch | Luft | Teilchengrößenverteilung des PMDA (Gew.%), d = mittlerer Durchmesser d ($\mu$m) | | | | | | | | | |
|---|---|---|---|---|---|---|---|---|---|---|---|---|---|---|
| | mm | mm | m/s | m/s | 0,64 | 1,1 | 1,7 | 2,5 | 3,4 | 4,3 | 5,7 | 7,7 | 18 | 27 |
| 1 | 3 | 4/4 | 154 | 84 | 3 | 14 | 9 | 31 | 25 | 6 | 8 | 1 | 2 | 1 |
| 2 | 10 | 4/4 | 154 | 84 | 4 | 9 | 13 | 34 | 25 | 7 | 3 | 2 | 2 | 1 |
| 3 | 20 | 4/4 | 154 | 84 | 3 | 9 | 6 | 28 | 35 | 11 | 4 | 1 | 2 | 1 |
| 4 | 40 | 4/4 | 154 | 84 | < 1 | 2 | 1 | 4 | 16 | 27 | 42 | 4 | 3 | 1 |
| 5 | 3 | 5,6/5,6 | 79 | 43 | < 1 | 1 | 2 | 3 | 9 | 20 | 38 | 11 | 11 | 5 |
| 6 | 20 | 5,6/5,6 | 79 | 43 | < 1 | 3 | 2 | 9 | 19 | 15 | 15 | 16 | 16 | 3 |
| 7 | 40 | 5,6/5,6 | 79 | 43 | < 1 | 1 | 2 | 2 | 3 | 12 | 58 | 16 | 8 | 3 |
| 8 | 3 | 8/8 | 39 | 21 | < 1 | < 1 | 1 | 1 | 6 | 12 | 26 | 15 | 23 | 14 |
| 9 | 10 | 8/8 | 39 | 21 | 1 | 3 | 2 | 2 | 7 | 12 | 18 | 9 | 13 | 31 |
| 10 | 20 | 8/8 | 39 | 21 | < 1 | < 1 | < 1 | < 1 | 1 | 7 | 22 | 20 | 25 | 25 |
| 11 | 40 | 8/8 | 39 | 21 | < 1 | < 1 | 1 | 1 | 2 | 3 | 14 | 17 | 31 | 31 |
| 12 | 3 | 12/12 | 17 | 10 | 1 | 2 | 2 | 1 | 4 | 18 | 45 | 13 | 10 | 4 |
| 13 | 10 | 12/12 | 17 | 10 | 3 | 17 | 15 | 3 | 2 | 4 | 8 | 19 | 23 | 6 |
| 14 | 20 | 12/12 | 17 | 10 | 16 | 32 | 12 | 5 | 5 | 5 | 5 | 6 | 8 | 6 |
| 15 | 40 | 12/12 | 17 | 10 | 4 | 8 | 14 | 8 | 7 | 7 | 9 | 16 | 20 | 7 |
| 16 | 20 | 5,6/8 | 79 | 21 | < 1 | 1 | 1 | 1 | 2 | 32 | 36 | 13 | 7 | 7 |
| 17 | 20 | 4/8 | 154 | 21 | < 1 | 1 | 1 | 4 | 26 | 32 | 20 | 6 | 6 | 4 |
| 18 | 20 | 8/5,6 | 39 | 43 | 3 | 10 | 8 | 7 | 2 | 6 | 17 | 21 | 22 | 4 |
| 19 | 40 | 4/4 | 154 | 84 | < 1 | 1 | 1 | 8 | 18 | 17 | 18 | 16 | 16 | 5 |
| 20 | 20 | 5,6/5,6 | 79 | 43 | < 1 | 1 | 1 | 7 | 26 | 28 | 15 | 9 | 9 | 4 |
| 21 | 40 | 5,6/5,6 | 79 | 43 | < 1 | < 1 | < 1 | 5 | 22 | 37 | 16 | 10 | 8 | 1 |
| 22 | 20 | 8/8 | 39 | 21 | 1 | 2 | 1 | 3 | 6 | 20 | 15 | 25 | 23 | 4 |
| 23 | 40 | 8/8 | 39 | 21 | < 1 | < 1 | < 1 | < 1 | < 1 | 9 | 51 | 16 | 16 | 7 |

a/b: Düsendurchmesser für das Gas-Dampf-Gemsisch/Düsendurchmesser für das Kühlgas

## Patentansprüche:

1. Verfahren zur fraktionierten Desublimation von dampfförmigen Feststoffen aus einem Gas-Dampf-Gemisch mit Hilfe eines Kühlgases, *dadurch gekennzeichnet*, daß das mittels einer Düse beschleunigte Gas-Dampf-Gemisch und das ebenfalls mittels einer Düse beschleunigte Kühlgas mit Strömungsgeschwindigkeiten von 10 bis 200 m/s aufeinanderprallen und die Mischtemperatur des resultierenden Gesamtstromes mit Hilfe der Menge und der Temperatur des Kühlgases so eingestellt wird, daß sie unterhalb der Sublimationstemperatur des gewünschten Feststoffes und oberhalb der Sublimationstemperaturen der Nebenprodukte liegt.

2. Verfahren nach Anspruch 1, *dadurch gekennzeichnet*, daß die Strömungsgeschwindigkeit des Gas-Dampf-Gemisches von 30 bis 160 m/s und die des Kühlgases von 20 bis 100 m/s beträgt.

3. Verfahren nach Anspruch 1 und 2, *dadurch gekennzeichnet*, daß als Kühlgas Sauerstoff und/oder Stickstoff und/oder Kohlendioxid und/oder Kohlenmonoxid verwendet wird.

4. Verfahren nach Anspruch 1 bis 3, *dadurch gekennzeichnet*, daß als Kühlgas Luft verwendet wird.

5. Verfahren nach Anspruch 1 bis 4, *dadurch gekennzeichnet*, daß der zu desublimierende Feststoff Pyromellitsäuredianhydrid ist.

6. Vorrichtung zur Durchführung des Verfahrens nach Anspruch 1, bestehend aus einem Düsenpaar, *dadurch gekennzeichnet*, daß die Düsen in ihrem gesamten Querschnitt einander gegenüberstehen, und daß die Düsenachsen auf einer Geraden liegen, und daß die Düsenöffnungen rund, vieleckig oder schlitzförmig sind, und daß der Durchmesser oder die Diagonale oder die Schlitzbreite 2 bis 12 mm, bevorzugt 4 bis 8 mm, und der Abstand zwischen der Düse für das Gas-Dampf-Gemisch und der Düse für das Kühlgas 2 bis 100 mm, insbesondere 20 bis 50 mm, betragen.

7. Vorrichtung nach Anspruch 6, *dadurch gekennzeichnet*, daß die Düse für das Gas-Dampf-Gemisch aus einem Material besteht, daß die Wärme gut leitet, oder daß die Düse beheizt wird.

8. Vorrichtung nach Anspruch 6 und 7, *dadurch gekennzeichnet*, daß die Düse für das Gas-Dampf-Gemisch mit einem Kragen versehen ist.

9. Vorrichtung nach Anspruch 6 bis 8, *dadurch gekennzeichnet*, daß der Kragen der Düse von der Düsenachse einen Abstand von 4 bis 16 mm, bevorzugt von 6 bis 12 mm, und eine Höhe von 4 bis 20 mm, bevorzugt von 8 bis 12 mm, aufweist.

10. Vorrichtung nach Anspruch 6 bis 9, *dadurch gekennzeichnet*, daß für große Durchsätze an Kühlgas und Gas-Dampf-Gemisch entsprechend viele Düsenöffnungen nebeneinander angeordnet sind.

**Claims**

1. A process for the fractional desublimation of vapourous solids from a gas-vapour mixture with the aid of a cooling gas, characterized in that the gas-vapour mixture, accelerated by means of a nozzle, and the cooling gas, likewise accelerated by means of a nozzle, collide with each other at flow velocities of 10 to 200 m/s and the mixing temperature of the resulting overall flow is set with the aid of the quantity and the temperature of the cooling gas such that it is below the sublimation temperature of the desired solid and above the sublimation temperatures of the byproducts.

2. A process according to claim 1, characterized in that the flow velocity of the gas-vapour mixture is 30 to 160 m/s and that of the cooling gas is 20 to 100 m/s.

3. A process according to claim 1 or 2, characterised in that oxygen and/or nitrogen and/or carbon dioxide and/or carbon monoxide is used as cooling gas.

4. A process according to any of claims 1 to 3, characterized in that air is used as cooling gas.

5. A process according to any of claims 1 to 4, characterized in that the solid to be desublimated is pyromellitic dianhydride.

6. A device to carry out the process according to claim 1, composed of a pair of nozzles, characterized in that the nozzles are located opposite each other in their entire cross-section, and in that the axes of the nozzles lie on a straight line, and in that the openings of the nozzles are round, many-cornered or slot-shaped, and in that the diameter or the diagonal or the slot width is 2 to 12 mm, preferably 4 to 8 mm, and in that the distance between the nozzle for the gas-vapour mixture and the nozzle for the cooling gas is 2 to 100 mm, in particular 20 to 50 mm.

7. A device according to claim 6, characterized in that the nozzle for the gas-vapour mixture is composed of a material which has good thermal conduction, or in that the nozzle is heated.

8. A device according to claim 6 or 7, characterized in that the nozzle for the gas-vapour mixture is provided with a collar.

9. A device according to any of claims 6 to 8, characterized in that the collar of the nozzle is spaced from 4 to 16 mm from the axis of the nozzle, preferably from 6 to 12 mm, and has a height of 4 to 20 mm, preferably of 8 to 12 mm.

10. A device according to any of claims 6 to 9, characterized in that a correspondingly large number of nozzle openings are arranged next to one another for large flow rates of cooling gas and gas-vapour mixture.

**Revendications**

1. Procédé pour la désublimation fractionnée de substances solides se présentant à l'état de vapeur, à partir d'un mélange de gaz et de vapeur à l'aide d'un gaz de refroidissement, *caractérisé* par le fait que le mélange de gaz et de vapeur, accéléré à l'aide d'une buse, et le gaz de refroidissement également accéléré à l'aide d'une buse se rencontrent avec des vitesses d'écoulement de 10 à 200 m/s et que la température de mélange du courant global résultant est ajustée, à l'aide de la quantité et de la température du gaz de refroidissement de manière à se trouver au-dessous de la température de sublimation de la substance solide désirée et au-dessus des températures de sublimation des sous-produits.

2. Procédé selon la revendication 1, *caractérisé* par le fait que la vitesse d'écoulement du mélange de gaz et de vapeur est de 30 à 160 m/s et celle du gaz de refroidissement de 20 à 100 m/s.

3. Procédé selon les revendications 1 et 2, *caractérisé* par le fait que l'on utilise, comme gaz de refroidissement, de l'oxygène et/ou de l'azote et/ou du dioxyde de carbone et/ou du monoxyde de carbone.

4. Procédé selon les revendications 1 à 3, *caractérisé* par le fait qu'on utilise de l'air comme gaz de refroidissement.

5. Procédé selon les revendications 1 à 4, *caractérisé* par le fait que la substance solide à désublimer est le di-anhydride de l'acide pyromellitique.

6. Dispositif pour la mise en oeuvre du procédé selon la revendication 1, formé d'une paire de buses, *caractérisé* par le fait que les buses sont en opposition sur toute leur section transversale et que les axes des buses se trouvent en ligne droite, et que les ouvertures des buses sont rondes, polygonales ou en forme de fente, et que le diamètre ou la diagonale ou la largeur de fente est de 2 à 12 mm, de préférence de 4 à 8 mm, et que l'intervalle entre la buse pour le mélange de vapeur et de gaz et la buse pour le gaz de refroidissement est de 2 à 100 mm, en particulier de 20 à 50 mm.

7. Dispositif selon la revendication 6, *caractérisé* par le fait que la buse pour le mélange de gaz et de vapeur est constituée par un matériau conduisant bien la chaleur, ou qu'elle est chauffée.

8. Dispositif selon la revendication 6 ou 7, *caractérisé* par le fait que la buse, pour le mélange de gaz et de vapeur, est pourvue d'une collerette.

9. Dispositif selon les revendications 6 à 8, *caractérisé* par le fait que la collerette de la buse présente un intervalle de 4 à 16 mm, de préférence de 6 à 12 mm, et une hauteur de 4 à 20 mm, de préférence de 8 à 12 mm.

10. Dispositif selon les revendications 6 à 9, *caractérisé* par le fait que pour de gros débits en gaz de refroidissement et en mélange de gaz et de vapeur, un nombre suffisamment grand d'ouvertures de buses sont disposées les unes à côté des autres.

Fig. 1

Fig. 2

Fig. 3

Fig. 4